# EUROPÄISCHE PATENTSCHRIFT

(11) **EP 4 032 432 B1**
(45) Veröffentlichungstag und Bekanntmachung des Hinweises auf die Patenterteilung: **21.01.2026**
(21) Anmeldenummer: 22174320.6
(22) Anmeldetag: 19.05.2022
(51) Int. Cl.: A46D 3/04, A46D 3/08, A46B 3/04, A46B 9/02, A46B 9/04, B29C 65/02

(54) **VERFAHREN ZUR HERSTELLUNG VON BÜRSTEN UND BÜRSTENHERSTELLUNGSVORRICHTUNG**
METHOD OF MANUFACTURING BRUSHES AND BRUSH MANUFACTURING DEVICE
PROCÉDÉ DE FABRICATION DE BROSSES ET DISPOSITIF DE FABRICATION DE BROSSES

(43) Veröffentlichungstag der Anmeldung: 27.07.2022
(73) Patentinhaber: Zahoransky AG, 79674 Todtnau (DE)
(72) Erfinder: König, Marc, 79299 Wittnau (DE); Kumpf, Ingo, 79674 Schlechtnau (DE); Kiefer, Florian, 79677 Fröhnd (DE)
(74) Vertreter: Mertzlufft-Paufler, Cornelius

(56) Entgegenhaltungen:
- WO-A1-2018/177594
- DE-A1- 19 853 030
- DE-A1- 3 403 341

## Beschreibung

Die Erfindung betrifft ein Verfahren zur Herstellung einer Bürste, insbesondere einer Zahnbürste, mit einem Borstenträger und einem Borstenbesatz aus Borstenfilamenten sowie eine Bürstenherstellungsvorrichtung zur Herstellung von Bürsten, insbesondere von Zahnbürsten.

Die Druckschrift WO 2018 177 594 A1 offenbart eine Druckplatteneinheit für eine Bürstenherstellungsvorrichtung zum thermischen Verpressen zumindest einer Borste in einer Verankerungsöffnung eines Borstenträger. Die Druckplatteneinheit umfasst eine elektrisch beheizbare Druckplatte sowie eine auf der Rückseite vorgesehene Trichterplatte, zwischen denen eine Isolierschicht angebracht ist.

Die Druckschrift DE 198 53 030 A1 offenbart ein Verfahren zur Herstellung von Borstenwaren, indem ein Borstenträger aus thermoplastischem Kunststoff mit Aufnahmen für die Borsten hergestellt, die Borsten mit ihren befestigungsseitigen Enden in die Aufnahmen eingeführt und durch Einwirken mechanischer Kräfte auf den Borstenträger an diesem befestigt werden, wobei der Borstenträger nach dem Einführen der Borsten in die Aufnahmen an seiner die Aufnahmen aufweisenden Oberfläche derart mit Druck beaufschlagt wird, dass der Borstenträger unter Reduzierung seiner Bauhöhe gestaucht und dabei Masse des Borstenträgers unter Verengung der Aufnahmen an die befestigungsseitigen Enden der Borsten diese seitlich umschließend verdrängt wird.

Die DE 34 03 341 A1 offenbart ein Verfahren zum Verbinden von Borsten mit einem Borstenträger, wobei die Borsten jeweils aus thermoplastischem Kunststoff bestehen, indem die Borsten an ihrem einen Ende und der Borstenträger an seiner Borstenaufnahmeseite aufgeschmolzen, anschließend Borsten und Borstenträger zusammengeführt und in dieser Lage gegebenenfalls bis zum Erstarren der Schmelze gehalten werden. Dabei werden die Borstenenden so erwärmt, dass eine Rückbildung der orientierten, gestreckten Moleküle in die nicht orientierte geknäuelte Molekülform erfolgt und sich dadurch eine Verdickung am Borstenende bildet. Anbschließend werden die Borsten mit ihrem verdickten Ende in den aufgeschmolzenen Borstenträger eingedrückt, bis dessen Schmelze hinter dem verdickten Ende wieder zusammenfließt.

Bei der Herstellung von Bürsten sind aus der Praxis zur Verbindung des Borstenträgers einer Bürste mit einem Besatz aus Borstenfilamenten verschiedene Verfahren vorbekannt. So ist es beispielsweise vorbekannt, die Borstenfilamente des Borstenbesatzes zu Borstenbündeln zusammengefasst mittels sogenannter Anker in Aufnahmelöchern eines Borstenträgers zu befestigen. Die Borstenbündel werden dabei zusammen mit den Ankern in die Aufnahmelöcher gestanzt. Für die Befestigung von Borstenbündeln mittels Ankern in Aufnahmelöchern müssen die Borstenträger allerdings eine gewisse Materialstärke aufweisen, die nicht unterschritten werden sollte. Weist der Borstenträger eine zu geringe Materialstärke auf, lässt sich die Anker-Technologie zur Befestigung der Borstenbündel nicht mehr zuverlässig und sinnvoll anwenden, da dann zu wenig Material vorhanden ist, in dem die Anker fixiert werden können.

Alternativ sind auch Verfahren zur ankerlos-Befestigung von Borstenfilamenten und Borstenbündeln aus Borstenfilamenten an Borstenträgern vorbekannt. Dabei können Borstenfilamente und Borstenträger beispielsweise stoffschlüssig miteinander verbunden werden. Hierbei werden die Borstenfilamente und der Borstenträger zumindest teilweise aufgeschmolzen und anschließend miteinander verbunden. Auch diese Vorgehensweise stößt bei dünnwandigen Borstenträgern jedoch an ihre Grenzen, da es schwierig ist, die Maßhaltigkeit dünnwandiger Borstenträger bei diesem Verfahren zu gewährleisten.

Aufgabe der Erfindung ist die Bereitstellung eines Verfahrens zur Herstellung von Bürsten, insbesondere von Zahnbürsten, sowie einer korrespondierenden Bürstenherstellungsvorrichtung mit verbesserten Gebrauchseigenschaften, bei denen auch die Verarbeitung dünnwandiger Borstenträger zuverlässig möglich ist.

Zur Lösung der Aufgabe wird zunächst ein Verfahren zur Herstellung einer Bürste, insbesondere einer Zahnbürste, vorgeschlagen, das die Mittel und Merkmale des unabhängigen, auf ein derartiges Verfahren gerichteten Anspruchs aufweist. Zur Lösung der Aufgabe wird somit insbesondere ein Verfahren zur Herstellung einer Bürste, insbesondere einer Zahnbürste, mit einem Borstenträger und einem Borstenbesatz aus Borstenfilamenten vorgeschlagen, wobei der Borstenträger und befestigungsseitige Enden der Borstenfilamente des Borstenbesatzes erwärmt und die befestigungsseitigen Enden der Borstenfilamente im Gegensatz zum Borstenträger aufgeschmolzen werden, wonach der Borstenträger und die Borstenfilamente des Borstenbesatzes miteinander verbunden werden, wobei der Borstenträger und die Borstenfilamente des Borstenbesatzes stoffschlüssig miteinander verbunden werden.

Das Verfahren ermöglicht eine zuverlässige Verbindung der Borstenfilamente des Borstenbesatzes mit dem Borstenträger der Bürste, ohne hierbei jedoch den Borstenträgern aufschmelzen zu müssen. Dies kann die Maßhaltigkeit des Borstenträgers und damit die Qualität der hergestellten Bürste verbessern. Dadurch eignet sich das erfindungsgemäße Verfahren insbesondere auch zur Herstellung von Bürsten mit filigranen und dünnwandigen Borstenträgern, die beispielsweise mit einem Verfahren der Anker-Technologie bisher nicht hergestellt werden konnten.

Die Erfindung basiert auf der Erkenntnis, dass für eine zuverlässige und vorzugsweise stoffschlüssige Verbindung, zwischen den Borstenfilamenten des Borstenbesatzes und dem Borstenträger einer Bürste der Borstenträger nicht aufgeschmolzen werden muss. Vielmehr ist es ausreichend, lediglich die befestigungsseitigen Enden der Borstenfilamente des Borstenbesatzes so hoch zu erwärmen, bis diese aufschmelzen. Es genügt, den Borstenträger nur zu erwärmen und so für die Verbindung mit den Borstenfilamenten des Borstenbesatzes vorzubereiten. Dabei ist es nicht erforderlich, den Borstenträger auch nur bereichsweise aufzuschmelzen.

Vorzugsweise werden der Borstenträger und die befestigungsseitigen Enden der Borstenfilamente des Borstenbesatzes dabei auf unterschiedliche Temperaturen erwärmt. Dies kann eine energieeffiziente Durchführung des Verfahrens begünstigen, insbesondere wenn der Borstenträger auf eine geringere Temperatur als die befestigungsseitigen Enden der Borstenfilamente erwärmt wird.

Der Borstenträger und die Borstenfilamente des Borstenbesatzes werden erfindungsgemäß stoffschlüssig miteinander verbunden. Auf diese Weise sind die Borstenfilamente des Borstenbesatzes besonders zuverlässig und belastbar an dem Borstenträger das Borstenbesatzes befestigt. Außerdem sind bei dieser Art der Befestigung keine Strukturen an dem Borstenträger zur beispielsweise formschlüssigen Verbindung des Borstenträgers mit dem Borstenbesatz notwendig. Dies kann die Herstellung der Borstenträger vereinfachen.

Vorteilhaft ist es, wenn der Borstenträger und die Borstenfilamente aus für eine stoffschlüssige Verbindung untereinander kompatiblen Werkstoffen oder aus demselben, für eine stoffschlüssige Verbindung untereinander kompatiblen Werkstoff bestehen.

Zur Herstellung einer besonders umweltfreundlichen Bürste kann es vorteilhaft sein, wenn der Borstenträger und die Borstenfilamente, vorzugsweise sämtliche Teile der Bürste, aus einem biologisch abbaubaren Werkstoff, insbesondere aus einem biologisch abbaubaren Kunststoff, beispielsweise aus Polyamid, vorzugsweise aus PA 10.10 oder PA 12, bestehen. Die Verwendung eines derartigen Werkstoffs zur Herstellung des Borstenträgers und der Borstenfilamente begünstigt eine umweltfreundliche Entsorgung bzw. ein möglichst einfaches Recycling der Bürste.

Insbesondere dann, wenn die Borstenfilamente und der Borstenträger aus unterschiedlichen Materialien bestehen, kann es zur Vereinfachung und/oder Verbesserung der Verbindung zwischen den Borstenfilamenten und dem Borstenträger sinnvoll sein, wenn Borstenfilamente und/oder Borstenträger bei der Durchführung des Verfahrens verwendet werden, die zumindest ein Additiv enthalten, das als Haftvermittler fungiert.

Insbesondere dann, wenn die Borstenfilamente und der Borstenträger aus unterschiedlichen Materialien bestehen, kann es zur Vereinfachung und/oder Verbesserung der Verbindung zwischen den Borstenfilamenten und dem Borstenträger sinnvoll sein, wenn vor dem Verbinden der Borstenfilamente mit dem Borstenträger ein Primer als Haftvermittler auf die Borstenfilamente und/oder den Borstenträger aufgebracht wird. Der Primer kann als Haftvermittler dienen und die Herstellung einer zuverlässigen Verbindung zwischen den Borstenfilamenten und dem Borstenträger vereinfachen. Als Primer kann ein Lack aufgetragen werden.

Als Primer und/oder Additiv kann beispielsweise ein Haftvermittler für Kunststoff, insbesondere für Polypropylen verwendet werden. Als Primer und/oder Additiv kann beispielsweise ein Haftvermittler vom PP-g-MAH-Typ verwendet werden. Möglich ist beispielsweise die Verwendung von Priex 20097, Polybond 3200, Exxelor PO 1020, Scona TPPP 8012, Scona TPPP 9012, Scona TPPP 9112, Licocene PP MA 6252 und/oder Licocene PP MA 7452 als Additiv und/oder Primer.

Vorteilhaft für die Verbindung von Borstenfilamenten und/oder Borstenträgern, die aus unterschiedlichen Kunststoffen bestehen, beispielsweise von Borstenfilamenten aus Polyamid (PA) oder Polybutylenterephthalat (PBT) und Borstenträgern aus Polypropylen (PP), kann die Verwendung solcher Additive und/oder Primer sein, die die Pfropfanteile der Verbindung, insbesondere der Kunststoffverbindung, zwischen den Borstenfilamenten und dem Borstenträger erhöhen. Vorzugsweise wird der Fügepartner, also der Borstenträger oder die Borstenfilamente, der aus Polypropylen besteht, durch ein Additiv und/oder einen Primer modifiziert. Dies kann vorzugsweise der Borstenträger sein, da dieser oftmals aus Polypropylen besteht.

Mit den zuvor erwähnten Primern und/oder Additiven kann es möglich sein, einen Borstenträger, der beispielsweise aus Polypropylen besteht, mit Borstenfilamenten aus einem anderen Material, beispielsweise aus Polyamid oder Polybutylenterephthalat, zu verbinden, ohne hierfür auch den Borstenträger aufschmelzen zu müssen.

Die Verwendung eines Additivs als Haftvermittler kann besonders vorteilhaft sein. Ein Additiv kann dem Rohmaterial, aus dem der Borstenträger und/oder die Borstenfilamente bestehen, beigefügt werden oder sein. So ist es möglich den Borstenträger und/oder die Borstenfilamente direkt aus dem mit dem Additiv modifizierten Rohmaterial herzustellen, beispielsweise zu extrudieren und/oder spritzzugießen. Ein separater Verfahrensschritt zum nachträglichen Aufbringen eines Primers als Haftvermittler auf den Borstenträger und/oder die Borstenfilamente kann auf diese Weise vermieden werden. Dies begünstigt eine wirtschaftliche Durchführung des Verfahrens.

Bei einer Ausführungsform der herzustellenden Bürste können der Borstenträger und/oder die Borstenfilamente beispielsweise aus Polypropylen (PP), Polybutylenterephthalat (PBT) und/oder Polyamid (PA) bestehen. Durch die Verwendung eines zuvor erwähnten Haftvermittlers, also eines Additivs und/oder eines Primers, bei der Durchführung des Verfahrens können der Borstenträger und die Borstenfilamente auch dann stoffschlüssig miteinander verbunden werden, wenn ihre Werkstoffe für eine stoffschlüssige Verbindung, insbesondere für eine Schweißverbindung oder eine Klebeverbindung, miteinander eigentlich weniger gut geeignet sind.

Eine stoffschlüssige Verbindung im Sinne der Erfindung kann insbesondere eine Schweißverbindung sein.

Durch das Aufschmelzen der befestigungsseitigen Enden der Borstenfilamente kann zumindest eine Trägerplatte erzeugt werden, die aus dem aufgeschmolzenen Filamentmaterial der befestigungsseitigen Enden der Borstenfilamente besteht. Die zumindest eine Trägerplatte kann Borstenfilamente eines oder mehrerer Borstenbündel miteinander verbinden. Eine Trägerplatte kann auch mehrere Borstenbündel oder sämtliche Borstenbündel des Borstenbesatzes miteinander verbinden. Durch das Aufschmelzen der befestigungsseitigen Enden können die Borstenfilamente eines oder mehrerer oder sämtlicher Borstenbündel des Borstenbesatzes somit bereits vor ihrer Verbindung mit dem Borstenträger untereinander verbunden werden. Dies kann die Herstellung der Bürste und insbesondere die Verbindung des Borstenbesatzes mit dem Borstenträger vereinfachen.

Bei einer bevorzugten Ausführungsform des Verfahrens wird der Borstenträger auf eine Temperatur unterhalb seiner Schmelztemperatur erwärmt. Auf diese Weise wird sichergestellt, dass der Borstenträger in keinem Bereich auch nur teilweise schmilzt. So lassen sich eine ungewünschte Verformung des Borstenträgers bei der Verbindung mit den Borstenfilamenten vermeiden und die Maßhaltigkeit des Borstenträgers bei der Durchführung des Verfahrens sicherstellen.

Insbesondere dann, wenn die Borstenfilamente und der Borstenträger aus demselben Werkstoff bestehen, kann der Borstenträger auf eine niedrigere Temperatur als die befestigungsseitigen Enden der Borstenfilamente erwärmt werden. So können die befestigungsseitigen Enden der Borstenfilamente aufgeschmolzen und der Borstenträger lediglich erwärmt, jedoch nicht aufgeschmolzen werden. Diese Vorgehensweise ist besonders energieeffizient.

Zur Verbindung der Borstenfilamente mit dem Borstenträger kann es zweckmäßig sein, den Borstenträger in eine Form einzusetzen. Die Form kann eine Formwand aufweisen, die den Borstenträger, insbesondere eine Aufnahmevertiefung des Borstenträgers für die befestigungsseitigen Enden der Borstenfilamente, zumindest abschnittsweise seitlich umgibt. Die Formwand der Form kann aufgeschmolzenes Filamentmaterial der befestigungsseitigen Enden der Borstenfilamente bei der Verbindung der Borstenfilamente des Borstenbesatzes mit dem Borstenträger derart leiten, dass ein Übertritt des aufgeschmolzenen Filamentmaterials über einen Außenumfang des Borstenträgers vermieden wird. Diese Vorgehensweise begünstigt die Beibehaltung einer möglichst glatten und versatzfreien Außenkontur des Borstenträgers. Zudem kann sich diese Variante des Verfahrens besonders gut für die Herstellung von Bürsten eignen, die besonders dünnwandige Borstenträger aufweisen. Zur Verbindung der Borstenfilamente mit einem dünnwandigen Borstenträger kann die Verwendung der Form bei der Verbindung der Borstenfilamente mit dem Borstenträger vorteilhaft sein, um den Borstenträger abzustützen. Die Form kann ferner die Maßhaltigkeit des Borstenträgers bei der Verbindung der Borstenfilamente mit dem Borstenträger begünstigen.

Wenn der Borstenträger eine Aufnahmevertiefung aufweist, in der die Borstenfilamente mit ihren befestigungsseitigen Enden an dem Borstenträger befestigt sind, kann diese Aufnahmevertiefung durch das aufgeschmolzene Filamentmaterial der befestigungsseitigen Enden der Borstenfilamente ausgefüllt und so der Borstenträger verstärkt und komplettiert werden. Diese Variante des Borstenträgers bzw. des Verfahrens zur Herstellung einer Bürste erlaubt die Bereitstellung von Bürsten mit besonders kompakt gestalteten Borstenträgern.

Ein Rand des Borstenträgers, der die zuvor erwähnte Aufnahmevertiefung seitlich begrenzt, kann dann durch die Form und insbesondere ihre Formwand abgestützt werden.

Die Borstenfilamente können zur Verbindung mit dem Borstenträger mit ihren aufgeschmolzenen befestigungsseitigen Enden gegen den erwärmten Borstenträger oder der erwärmte Borstenträger gegen die aufgeschmolzenen Enden der Borstenfilamente gedrückt werden. Dabei kann ein Drücker einer Bürstenherstellungsvorrichtung verwendet werden. Die aufgeschmolzenen befestigungsseitigen Enden sind hierbei ebenfalls noch warm und vorzugsweise noch schmelzflüssig, zumindest aber noch weich und plastisch, sodass eine gute Verbindung zwischen dem Borstenträger und den Borstenfilamenten hergestellt werden kann.

Um eine zwischen dem Borstenträger und den Borstenfilamenten erzeugte Verbindung nach der Verbindung des Borstenträgers mit den Borstenfilamenten möglichst schnell auszuhärten, kann der Borstenträger nach Verbindung mit den Borstenfilamenten gekühlt werden. Dies kann mit Hilfe einer Kühlvorrichtung einer nachfolgend näher erläuterten Bürstenherstellungsvorrichtung und/oder über die zuvor erwähnte Form geschehen.

Zur Lösung der Aufgabe wird auch eine Bürstenherstellungsvorrichtung zur Herstellung von Bürsten, insbesondere von Zahnbürsten, vorgeschlagen, die die Merkmale des unabhängigen, auf eine derartige Bürstenherstellungsvorrichtung gerichteten Anspruchs aufweist. Die Bürstenherstellungsvorrichtung ist dadurch erfindungsgemäß zur Durchführung eines Verfahrens nach einem der auf ein solches gerichteten Ansprüche eingerichtet.

Die Bürstenherstellungsvorrichtung weist erfindungsgemäß eine Heizvorrichtung auf, die dazu eingerichtet ist, befestigungsseitige Enden von Borstenfilamenten eines Borstenbesatzes und einen Borstenträger, mit dem die Borstenfilamente des Borstenbesatzes verbunden werden sollen, zu erwärmen und die befestigungsseitigen Enden der Borstenfilamente im Gegensatz zum Borstenträger aufzuschmelzen.

Mit der Bürstenherstellungsvorrichtung können die befestigungsseitigen Enden der Borstenfilamente durch das Erwärmen aufgeschmolzen werden, während der Borstenträger lediglich erwärmt, jedoch nicht aufgeschmolzen wird und daher maßhaltig bleibt.

Bei einer bevorzugten Ausführungsform der Bürstenherstellungsvorrichtung umfasst die Heizvorrichtung zwei Heizflächen. Von den beiden Heizflächen ist eine erste Heizfläche zur Erwärmung von befestigungsseitigen Enden von Borstenfilamenten eines Borstenbesatzes einer herzustellenden Bürste und eine zweite Heizfläche zur Erwärmung eines Borstenträgers der herzustellenden Bürste vorgesehen, mit dem die Borstenfilamente des Borstenbesatzes verbunden werden sollen. Die Heizvorrichtung ist bei dieser Ausführungsform der Bürstenherstellungsvorrichtung durch ihre beiden Heizflächen dazu eingerichtet, die befestigungsseitigen Enden der Borstenfilamente und den Borstenträger zu erwärmen und die befestigungsseitigen Enden der Borstenfilamente im Gegensatz zum Borstenträger aufzuschmelzen.

Vorzugsweise ist die Heizvorrichtung, insbesondere durch ihre beiden Heizflächen, dazu eingerichtet, die befestigungsseitigen Enden der Borstenfilamente und den Borstenträger auf unterschiedliche Temperaturen zu erwärmen. Dies ist vorteilhaft, wenn die Borstenfilamente und der Borstenträger dieselbe Schmelztemperatur haben und nur die befestigungsseitigen Enden der Borstenfilamente aufgeschmolzen werden sollen.

Die Heizvorrichtung kann beispielsweise dazu eingerichtet sein, die Heizflächen auf unterschiedliche Temperaturen zu erwärmen. Auf diese Weise ist es möglich, die befestigungsseitigen Enden der Borstenfilamente einerseits und den Borstenträger der herzustellenden Bürste andererseits auf unterschiedliche Temperaturen zu erwärmen und so das zuvor ausführlich erläuterte Verfahren durchzuführen.

Die Heizvorrichtung kann insbesondere dazu eingerichtet sein, die erste Heizfläche auf eine Temperatur zu erwärmen, die ausreicht, um die befestigungsseitigen Enden der Borstenfilamente aufzuschmelzen. Die Heizvorrichtung kann ferner dazu eingerichtet sein, die zweite Heizfläche auf eine Temperatur zu erwärmen, die ausreicht, um den Borstenträger auf eine Temperatur unterhalb seiner Schmelztemperatur zu erwärmen. Auf diese Weise wird sichergestellt, dass die befestigungsseitigen Enden der Borstenfilamente bei Verwendung der Bürstenherstellungsvorrichtung aufgeschmolzen werden, der Borstenträger zwar erwärmt, jedoch nicht aufgeschmolzen wird und damit formstabil und maßhaltig bleibt.

Bei einer Ausführungsform der Bürstenherstellungsvorrichtung ist vorgesehen, dass ein Abstand zwischen der ersten Heizfläche und einer von der Bürstenherstellungsvorrichtung vorgegebenen Position, in der die befestigungsseitigen Enden der Borstenfilamente zum Erwärmen und Aufschmelzen bereitgehalten werden, größer als ein Abstand zwischen der zweiten Heizfläche und einer von der Bürstenherstellungsvorrichtung vorgegebenen Position ist, in der der Borstenträger zum Erwärmen bereitgehalten wird. Bei dieser Variante der Bürstenherstellungsvorrichtung ist es somit möglich, die beiden Heizflächen der Heizvorrichtung auf dieselbe Temperatur zu erwärmen. Durch die unterschiedlichen Abstände zwischen den von der Bürstenherstellungsvorrichtung vorgegebenen Positionen, in denen die befestigungsseitigen Enden der Borstenfilamente einerseits und der Borstenträger andererseits bereitgehalten werden, und der jeweiligen Heizfläche kann die gewünschte, gegebenenfalls unterschiedliche Erwärmung der befestigungsseitigen Enden der Borstenfilamente und des Borstenträgers sichergestellt werden.

Bei einer besonders kompakten Ausführungsform der Bürstenherstellungsvorrichtung ist vorgesehen, dass die beiden Heizflächen an einem gemeinsamen Heizelement, insbesondere an unterschiedlichen Seiten des gemeinsamen Heizelements, vorzugsweise an einander abgewandten Seiten des Heizelements, angeordnet sind. Auf diese Weise kann das Heizelement zwischen den einerseits bereitgehaltenen Borstenträger und die andererseits bereitgehaltenen befestigungsseitigen Enden der Borstenfilamente positioniert werden.

Zur Durchführung des zuvor erläuterten Verfahrens kann es zweckmäßig sein, wenn die Heizvorrichtung zur vorzugsweise unabhängigen Regelung der Temperaturen der beiden Heizflächen eingerichtet ist. Dabei kann die Heizeinrichtung eine Steuereinheit und zumindest einen Temperatursensor zur Erfassung und zur Regelung der Temperatur zumindest einer der beiden Heizflächen aufweisen. Vorzugsweise ist jeder Heizfläche zumindest ein Temperatursensor zugeordnet. Auf diese Weise ist es möglich, die Temperaturen der beiden Heizflächen der Heizvorrichtung unabhängig voneinander zu erfassen und individuell zu überwachen und mithilfe der Steuereinheit der Bürstenherstellungsvorrichtung gegebenenfalls anzupassen, sollte eine Abweichung zwischen der Ist-Temperatur der Heizflächen und einer Soll-Temperatur der Heizflächen festgestellt werden.

Die Bürstenherstellungsvorrichtung kann eine Form zur Aufnahme und Abstützung des Borstenträgers beim Verbinden des Borstenträgers mit den Borstenfilamenten des Borstenbesatzes aufweisen. Die Vorteile einer derartigen Form wurden bereits im Kontext des Verfahrens erläutert. Die Verwendung einer derartigen Form eignet sich besonders für die Verarbeitung von dünnwandigen Borstenträgern.

Die Bürstenherstellungsvorrichtung kann eine Abgabevorrichtung zur Abgabe von Primer auf Borstenfilamente und/oder Borstenträger aufweisen. Vor der Verbindung der Borstenfilamente mit den Borstenträgern kann auf diese Weise Primer auf Borstenfilamente und/oder Borstenträger abgegeben werden. Primer kann die Herstellung einer zuverlässigen Verbindung zwischen Borstenfilamenten und Borstenträgern begünstigen.

Die Bürstenherstellungsvorrichtung kann ferner einen Filamenthalter zum, insbesondere klemmenden, Halten der Borstenfilamente des Borstenbesatzes aufweisen. Mithilfe des Filamenthalters ist es möglich, die Filamente des Borstenbesatzes mit ihren befestigungsseitigen Enden in der zuvor bereits erwähnten Position an der ersten Heizfläche der Heizvorrichtung zu halten, um die befestigungsseitigen Enden der Borstenfilamente zu erwärmen und letztendlich aufzuschmelzen. Der Filamenthalter kann auch dazu verwendet werden, die Borstenfilamente des Borstenbesatzes bei dem Verbinden der Borstenfilamente mit dem Borstenbesatz zu führen. Hierbei können die Borstenfilamente, insbesondere über eine Reinigungsseite des Borstenbesatzes, in Bezug auf ihre Längsachsen axial beaufschlagt und gegen den erwärmten Borstenträger gedrückt werden. Zu diesem Zweck kann die Bürstenherstellungsvorrichtung einen Drücker aufweisen, der dazu eingerichtet ist, Borstenfilamente des Borstenbesatzes mit ihren aufgeschmolzenen befestigungsseitigen Enden gegen einen erwärmten Borstenträger zu drücken, um die Borstenfilamente so mit dem Borstenträger zu verbinden. Der Drücker kann auch dazu eingerichtet sein, einen erwärmten Borstenträger gegen aufgeschmolzene Enden von Borstenfilamenten zu drücken, um den Borstenträger und die Borstenfilamente miteinander zu verbinden.

Ferner ist es vorteilhaft, wenn der Filamenthalter ein Lochbild von vorzugsweise als Durchgangslöcher ausgebildeten Aufnahmelöchern für die Borstenfilamente und/oder Borstenbündel des Borstenbesatzes aus Borstenfilamenten aufweist.

Sind die Aufnahmelöcher des Filamenthalters als Durchgangslöcher ausgebildet, können die in den Aufnahmelöchern befindlichen Borstenfilamente und/oder Borstenbündel in einer in Bezug auf ihre Längsachsen axialen Bewegung aus den Aufnahmelöchern geschoben werden, um die aufgeschmolzenen befestigungsseitigen Enden der Borstenfilamente gegen den erwärmten Borstenträger zu drücken und die Borstenfilamente mit dem Borstenträger zu verbinden.

Der Filamenthalter kann beispielsweise als Kassette ausgebildet sein und/oder zwischen einzelnen Stationen der Bürstenherstellungsvorrichtung transportierbar sein.

Der Filamenthalter kann ferner eine Klemmung aufweisen, mit der die Borstenfilamente des Borstenbesatzes in den Aufnahmelöchern des Filamenthalters fixiert werden können. Während dem Erwärmen und Aufschmelzen der befestigungsseitigen Enden der Borstenfilamente kann die Klemmung geschlossen sein, so dass die Borstenfilamente zuverlässig und positionstreu in dem Filamenthalter gehalten werden können.

Sobald die befestigungsseitigen Enden der Borstenfilamente aufgeschmolzen und der Borstenträger erwärmt sind, kann die Klemmung des Filamenthalters geöffnet werden. Wenn die Klemmung des Filamenthalters geöffnet ist, können die Borstenfilamente des Borstenbesatzes mit ihren aufgeschmolzenen befestigungsseitigen Enden, beispielsweise mithilfe des zuvor bereits erwähnten Drückers der Bürstenherstellungsvorrichtung, gegen den erwärmten Borstenträger gedrückt werden, um die Borstenfilamente mit dem Borstenträger zu verbinden.

Um eine Prozesszeit zu reduzieren, die benötigt wird, um die Verbindung zwischen den Borstenfilamenten und dem Borstenbesatz herzustellen und vor allem auszuhärten, ist es vorteilhaft, wenn die Bürstenherstellungsvorrichtung eine Kühlvorrichtung aufweist. Die Kühlvorrichtung kann dazu eingerichtet sein, den Borstenträger nach Verbindung der Borstenfilamente mit dem Borstenträger abzukühlen. Die Kühlvorrichtung kann beispielsweise über die zuvor bereits erwähnte Form der Bürstenherstellungsvorrichtung auf den darin platzierten Borstenträger wirken.

Die Bürstenherstellungsvorrichtung kann ferner ein Magazin zur Aufnahme eines Vorrats an losen Borstenfilamenten aufweisen. Dem Magazin nachgelagert kann die Bürstenherstellungsvorrichtung eine Bündelabteilvorrichtung umfassen, die dazu eingerichtet ist, Borstenbündel aus Borstenfilamenten aus dem im Magazin enthaltenen Vorrat loser Borstenfilamente auszufassen und für die Zusammenstellung eines Borstenbesatzes bereitzustellen.

Die Bürstenherstellungsvorrichtung kann ferner eine Bündelumformeinheit aufweisen, die dazu eingerichtet ist, die aus dem Borstenmagazin ausgefassten Borstenbündel in eine für die Herstellung der Bürsten gewünschte Zielform zu transformieren.

Aus der Bündelumformeinheit können die Borstenbündel dem bereits zuvor erwähnten Filamenthalter übergeben werden. In dem Filamenthalter können die Borstenbündel dann in einer Anordnung relativ zueinander gehalten sein, die sie auch im Borstenbesatz der herzustellenden Bürste später einnehmen.

Die Erfindung wird nachfolgend anhand eines Ausführungsbeispiels näher erläutert. Die Erfindung ist nicht auf das in den Figuren gezeigte Ausführungsbeispiel beschränkt. Weitere Ausführungsbeispiele der Erfindung ergeben sich durch Kombination der Merkmale einzelner Ansprüche und/oder durch Kombination der Merkmale des gezeigten Ausführungsbeispiels. Es zeigen:
- Figuren 1 bis 4: unterschiedliche Ansichten einer als Zahnbürste ausgebildeten Bürste, wobei zu erkennen ist, dass ein Borstenträger der Bürste eine Aufnahmevertiefung zur Aufnahme der befestigungsseitigen Enden von Borstenfilamenten eines Borstenbesatzes der Bürste aufweist, die nach Befestigung der Borstenfilamente an dem Borstenträger durch aufgeschmolzenes Filamentmaterial ausgefüllt ist,
- Figur 5: eine perspektivische Ansicht des Borstenbesatzes der in den Figuren 1 bis 4 gezeigten Bürste nach Aufschmelzen der befestigungsseitigen Enden seiner Borstenfilamente,
- Figuren 6 bis 9: unterschiedliche Ansichten einer weiteren Ausführungsform einer vergleichbaren Bürste, deren Aufnahmevertiefung zur Aufnahme eines Borstenbesatzes von einer Struktur aus Versteifungsrippen durchsetzt ist,
- Figur 10: eine perspektivische Ansicht des Borstenbesatzes der in den Figuren 6 bis 9 gezeigten Bürste nach Aufschmelzen der befestigungsseitigen Enden seiner Borstenfilamente,
- Figur 11: eine schematisierte Darstellung von Teilen einer Bürstenherstellungsvorrichtung zur Herstellung der in den vorherigen Figuren dargestellten Bürsten, sowie
- Figuren 12 bis 14: weitere Teile der Bürstenherstellungsvorrichtung zur Veranschaulichung eines Verfahrens zur Herstellung der in den Figuren 1 bis 10 zumindest in Teilen gezeigten Bürsten.

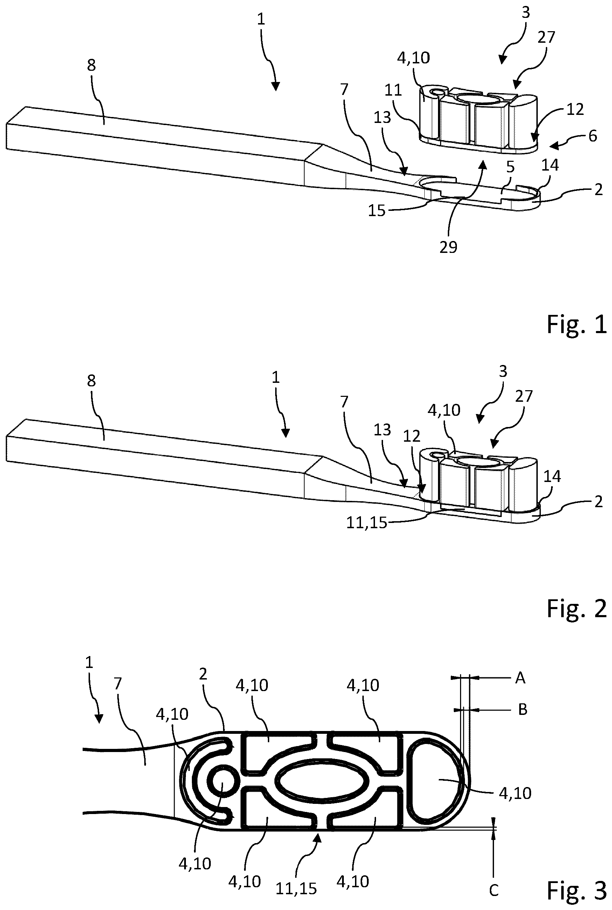

Die Figuren 1-5 sowie 6-10 zeigen zumindest Teile jeweils einer im Ganzen mit 1 bezeichneten Bürste, die als Zahnbürste ausgebildet ist. Wenn nicht explizit darauf hingewiesen wird, beziehen sich die nachfolgenden Ausführungen auf beide in den Figuren gezeigten Ausführungsformen der Bürste 1.

Die Bürste 1 weist einen Borstenträger 2 auf nämlich einen Bürstenkopf, an dem ein Borstenbesatz 3 aus Borstenfilamenten 4 befestigt ist.

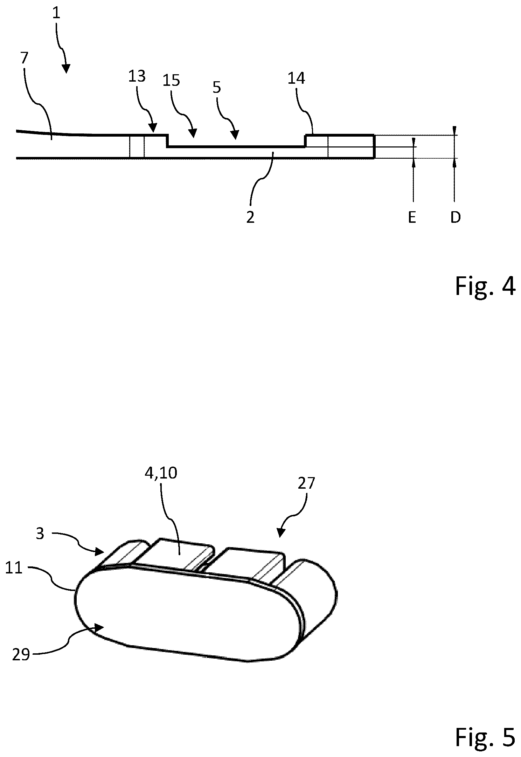

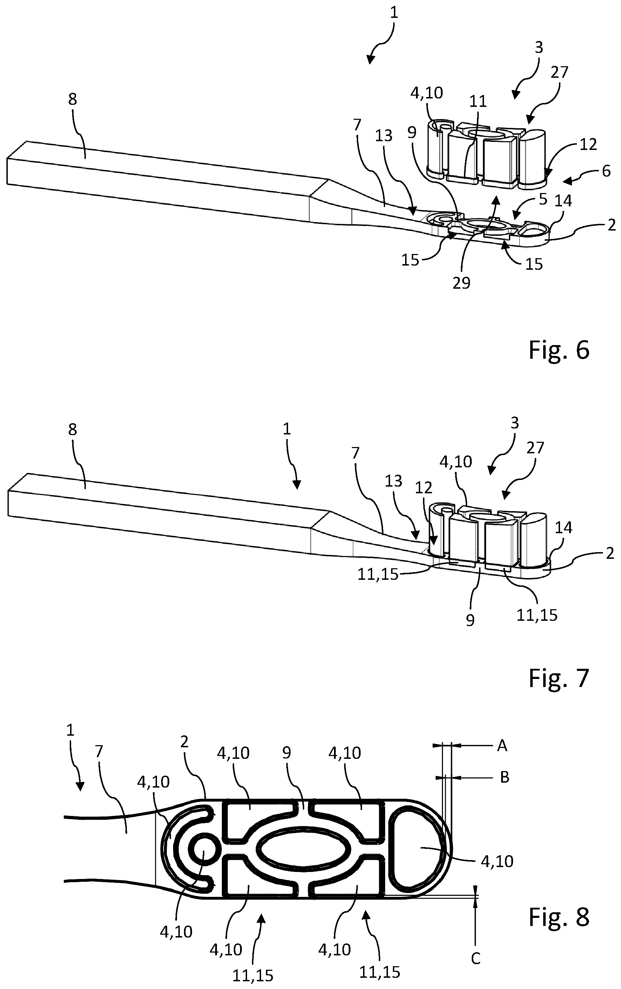

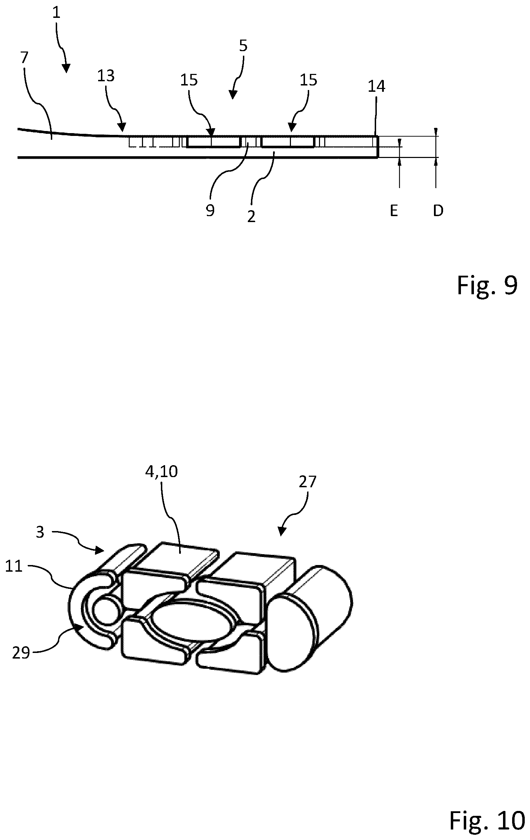

Beispielsweise die Figuren 1 und 6 verdeutlichen, dass die Bürste 1 an ihrem Borstenträger 2 eine Aufnahmevertiefung 5 aufweist. In der Aufnahmevertiefung 5 sind Borstenfilamente 4 mit ihren befestigungsseitigen Enden 6 befestigt. Die Aufnahmevertiefung 5 ist durch zur Befestigung der Borstenfilamente 4 aufgeschmolzenes Filamentmaterial der befestigungsseitigen Enden 6 an der fertigen Bürste 1 ausgefüllt. Der Borstenträger 2, nämlich der Bürstenkopf, ist über einen Halsabschnitt 7 der Bürste 1 mit einem Griff 8 der Bürste 1 verbunden. Beispielsweise die Figuren 1 und 4 zeigen, dass der Borstenträger 2 vor Befestigung der Borstenfilamente 4 im Bereich der Aufnahmevertiefung 5 seine geringste, in Richtung einer Normalen auf die Aufnahmevertiefung 5 messbare Materialstärke aufweist. In benachbarten Bereichen ist der Borstenträger 2 dicker ausgebildet. Dies zeigen beispielsweise die Figuren 4 und 9, in denen die Materialstärke E im Bereich der Aufnahmevertiefung 5 und die Materialstärke D in benachbarten Abschnitten des Borstenträgers 2 durch eine Bemaßung verdeutlicht sind.

Der Borstenträger 2 ist durch das aufgeschmolzene Filamentmaterial der Borstenfilamente 4 nach Befestigung der Borstenfilamente 4 an dem Borstenträger 2 im Bereich seiner ausgefüllten Aufnahmevertiefung 5 verstärkt.

Bei dem in den Figuren 6-10 gezeigten Ausführungsbeispiel einer Bürste 1 sind innerhalb der Aufnahmevertiefung 5 Versteifungsrippen 9 ausgebildet, die dem Borstenträger 2 trotz seiner vergleichsweise geringen Materialstärke E im Bereich der Aufnahmevertiefung 5 eine gute Stabilität verleihen. Dies kann die Handhabung des Borstenträgers 2 bei der Herstellung der Bürste 1 vereinfachen.

Durch die innerhalb der Aufnahmevertiefung 5 vorhandenen Versteifungsrippen 9 ist die Aufnahmevertiefung 5 segmentiert. Die Anordnung der Versteifungsrippen 9 erzeugt ein Muster aus einzelnen Aufnahmen, die hinsichtlich Form und Anordnung einer Querschnittsform und Anordnung von Borstenbündeln 10 des Borstenbesatzes 3, die aus den Borstenfilamenten 4 bestehen, entspricht.

Die Figuren 5 und 10 verdeutlichen, dass das aufgeschmolzene Filamentmaterial des jeweils gezeigten Borstenbesatzes 3 zumindest eine Trägerplatte 11 bildet, die die Aufnahmevertiefung 5 der jeweiligen Bürste 1 nach Befestigung der Borstenfilamente 4 an dem Borstenträger 2 ausfüllt.

Durch die Trägerplatte 11 können die Borstenfilamente 4 bzw. die aus den Borstenfilamenten 4 gebildeten Borstenbündel 10 untereinander verbunden sein. Dies ist insbesondere bei der in Figur 5 gezeigten Trägerplatte 11 der Fall.

Bei dem in Figur 10 gezeigten Borstenbesatz 3 sind die Borstenfilamente 4 innerhalb eines Borstenbündels 10 durch eine Trägerplatte 11 verbunden. Jedes der insgesamt acht Borstenbündel 10 weist somit eine Trägerplatte 11 auf.

Die Trägerplatte 11 füllt die Aufnahmevertiefung 5 derart aus, dass eine Oberfläche 12 der Trägerplatte 11 bündig mit einer an die Aufnahmevertiefung 5 und den Borstenbesatz 3 angrenzenden Bürstenoberfläche 13 der Bürste 1 ist. In analoger Weise füllen auch die mehreren Trägerplatten 11 des in Figur 10 gezeigten Borstenbesatzes 3 die Teile der durch die Versteifungsrippen 9 segmentierten Aufnahmevertiefung 5 des in den Figuren 6 bis 9 gezeigten Borstenträgers 2 auf. Auch dort sind Oberflächen 12 der Trägerplatten 11 dann bündig mit einer die Aufnahmevertiefung 5 umgebenden Bürstenoberfläche 13 der Bürste 1.

Die Borstenfilamente 4 und der Borstenträger 2, wie auch der Halsabschnitt 7 und der Griff 8 der Bürste 1, bestehen aus demselben Werkstoff, der zudem eine stoffschlüssige Verbindung zwischen dem Borstenfilamenten 4 und dem Borstenträger 2 erlaubt.

Die in den Figuren gezeigten Bürsten 1 sind somit sogenannte Einstoffbürsten. Da als Werkstoff für die Herstellung des Borstenträgers 2, des Halsabschnitts 7 und des Griffs 8 sowie der Borstenfilamente 4 des Borstenbesatzes 3 der Bürste 1 ein biologisch abbaubarer Kunststoff, beispielsweise Polyamid, nämlich vorzugsweise PA 10.10 oder PA 12, verwendet wird, ist die Bürste 1 besonders umweltfreundlich und lässt sich einfach recyceln.

Die in der Aufnahmevertiefung 5 befestigten Borstenfilamente 4 und der Borstenträger 2 bilden nach ihrer Verbindung eine stofflich homogene, monolithische Einheit und sind stoffschlüssig miteinander verbunden.

Der Borstenträger 2 weist einen die Aufnahmevertiefung 5 seitlich begrenzenden Rand 14 auf. Der Rand 14 dient dazu, das aufgeschmolzene Filamentmaterial bei der Verbindung der Borstenfilamente 4 mit dem Borstenträger 2 derart zu führen, dass die Aufnahmevertiefung 5 mit dem aufgeschmolzenen Filamentmaterial der befestigungsseitigen Enden 6 der Borstenfilamente 4 ausgefüllt wird.

In dem Rand 14 sind jeweils mehrere Ausnehmungen 15 ausgebildet, die durch das aufgeschmolzene Filamentmaterial der befestigungsseitigen Enden 6 der Borstenfilamente 4 bevorzugt bündig mit benachbarten Randabschnitten ausgefüllt werden. Dies verdeutlicht beispielsweise Figur **3****,** die eine Draufsicht auf den als Bürstenkopf ausgebildeten Borstenträger 2 der einen Bürste 1 zeigt.

Aus dieser Darstellung wird ersichtlich, dass die Ausnehmungen 15 im Rand 14 nahezu vollständig mit dem aufgeschmolzenen Filamentmaterial der befestigungsseitigen Enden 6 der Borstenfilamente 4 ausgefüllt sind.

Figuren 3 und 8 zeigen, dass der Borstenbesatz 3 an der fertigen Zahnbürste in einem Bereich, in dem der Borstenbesatz 3 benachbart zu dem Rand 14 des Borstenträgers **2,** der die Aufnahmevertiefung 5 begrenzt, angeordnet ist, beispielsweise einen Abstand A von 0,5 mm bis 3 mm zu einem Umfang des Borstenträgers 2 aufweisen kann. Der Abstand A definiert in diesem Fall auch den Abstand der Borstenbündel 10 zu dem Umfang des Borstenträgers **2.**

Figuren 3 und 8 zeigen auch, dass das aufgeschmolzene Filamentmaterial und damit die Trägerplatte 11 dort, wo sie vom Rand 14 des Borstenträgers 2 umgeben sind, einen Abstand B zu dem Umfang des Borstenträgers 2 von beispielsweise 0,3 mm bis 2 mm aufweisen können. Der Abstand B definiert in diesem Fall auch die Randdicke des Randes 14 des Borstenträgers **2,** der die Aufnahmevertiefung 5 begrenzt und an der Trägerplatte 11 anliegt.

Figuren 3 und 8 zeigen ferner, dass das aufgeschmolzene Filamentmaterial und damit die Trägerplatte 11 im Bereich einer Ausnehmung 15 in einem die Aufnahmevertiefung 5 umgebenden Rand 14 des Borstenträgers 2 einen Abstand C zu dem Umfang des Borstenträgers 2 von beispielsweise 0 mm bis 2 mm aufweisen kann. Das aufgeschmolzene Filamentmaterial, das die Trägerplatte 11 bildet, kann im Bereich einer Ausnehmung 15 im Rand 14 somit bis ganz nach außen reichen, die Ausnehmung 15 ausfüllen und einen bündigen Abschluss mit angrenzenden Randabschnitten bilden.

Figuren 4 und 9 zeigen, dass der Borstenträger 2 randseitig und nach Befestigung der Borstenfilamente 4 an dem Borstenträger 6 der Borstenträger 2 eine Materialstärke D von 2 mm bis 6 mm aufweisen kann. Die Materialstärke D definiert hierbei die Kopfdicke des Borstenträgers.

Figuren 4 und 9 zeigen ferner, dass eine Materialstärke E im Bereich der Aufnahmevertiefung 5 vor Befestigung der Borstenfilamente 4 an dem Borstenträger 2 bei Zahnbürsten beispielsweise 1 mm bis 4 mm betragen kann. Die Differenz der Größen D und E definiert dann die Höhe des Randes 14 über der Aufnahmevertiefung 5.

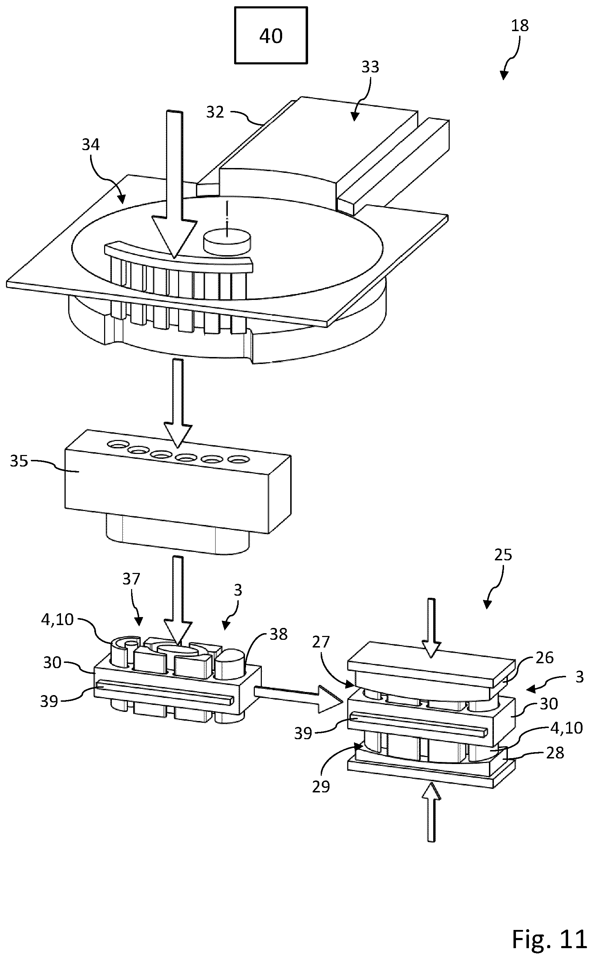

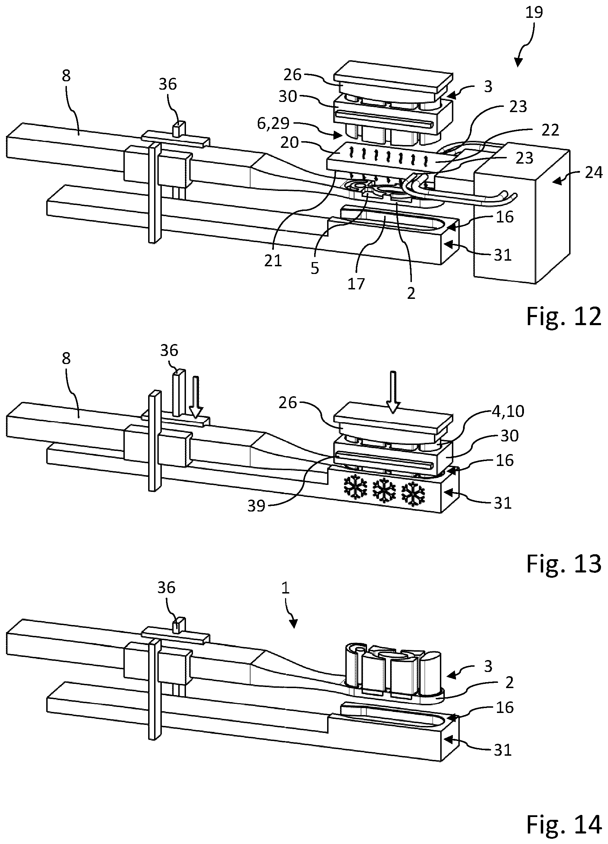

Die Figuren 11-14 veranschaulichen ein Verfahren zur Herstellung einer Bürste 1, wie sie in den Figuren 1-9 zumindest in Teilen dargestellt ist. Figur 12 zeigt, dass zunächst die befestigungsseitigen Enden 6 der Borstenfilamente 4 und der Borstenträger 2 zur Verbindung der Borstenfilamente 4 mit dem bereitgehaltenen Borstenträger 2 erwärmt werden. Dabei werden die befestigungsseitigen Enden 6 der Borstenfilamente 4 im Gegensatz zu dem Borstenträger 2 aufgeschmolzen. Anschließend werden der Borstenträger 2 und die Borstenfilamente 4 des Borstenbesatzes 3 miteinander verbunden.

Die zuvor erwähnte Aufnahmevertiefung 5 des Borstenträgers 2 wird beim Befestigen der Borstenfilamente 4 an dem Borstenträger 2 durch dafür aufgeschmolzenes Filamentmaterial der befestigungsseitigen Enden 6 der Borstenfilamente 4 ausgefüllt. Die Figur 12 zeigt ferner, dass hierbei nicht nur die befestigungsseitigen Enden 6 der Borstenfilamente 4, sondern auch der Borstenträger 2 im Bereich seiner Aufnahmevertiefung 5 berührungslos mittels Wärmestrahlung erwärmt wird.

Die befestigungsseitigen Enden 6 der Borstenfilamente 4 und der Borstenträger 2 werden auf unterschiedliche Temperaturen erwärmt und stoffschlüssig verbunden. Konkret werden die befestigungsseitigen Enden 6 der Borstenfilamente 4 bei dem Verfahren auf eine höhere Temperatur als der Borstenträger 2 erwärmt. Während die befestigungsseitigen Enden 6 der Borstenfilamente 4 so hoch erwärmt werden, dass sie schmelzen, ist die Temperatur, auf die der Borstenträger 2 im Bereich seiner Aufnahmevertiefung 5 erwärmt wird, niedriger gewählt, so dass der Borstenträger 2 nicht schmilzt. Die Temperatur, auf die der Borstenträger 2 erwärmt wird, liegt dabei unterhalb seiner Schmelztemperatur. Nach ihrer Befestigung an dem Borstenträger 2 sind die Borstenfilamente 4 und der Borstenträger 2 stoffschlüssig miteinander verbunden und bilden die bereits zuvor erwähnte stofflich homogene, monolithische Einheit. Dies ist möglich, da der Borstenträger 2 und die Borstenfilamente 4 aus demselben für eine stoffschlüssige Verbindung untereinander kompatiblen Werkstoff bestehen.

Um die Verbindung zwischen den Borstenfilamenten 4 und dem Borstenträger 2 zu vereinfachen und/oder zu verbessern, enthalten die Borstenfilamente 4 und/oder der Borstenträger 2 zumindest ein Additiv, das als Haftvermittler fungiert. Ferner kann vor dem Verbinden der Borstenfilamente 4 mit dem Borstenträger 3 ein Primer als Haftvermittler auf die Borstenfilamente 4 und/oder den Borstenträger 2 aufgebracht werden.

Primer, der auf den Borstenträger 2 und/oder die Borstenfilamente 4 aufgetragen wird, und/oder ein Additiv, beispielsweise das dem Material, aus dem der Borstenträger 2 und/oder die Borstenfilamente 4 bestehen, beigemischt sein kann, können die Herstellung einer zuverlässigen Verbindung zwischen den Borstenfilamenten 4 und dem Borstenträger 2 vereinfachen.

Vorteilhaft ist die Verwendung solcher Additive und/oder Primer, die die Pfropfanteile der Verbindung, insbesondere der Kunststoffverbindung zwischen den Borstenfilamenten 4 und dem Borstenträger 2 erhöhen. Auf diese Weise können sich auch Borstenträger 2 und Borstenfilamente 4 mit dem beschriebenen Verfahren zuverlässig verbinden lassen, die aus unterschiedlichen Materialien bestehen. So können mithilfe von Additiven und/oder Primern beispielsweise Borstenträger 2 aus Polypropylen mit Borstenfilamenten 4 verbunden werden, die beispielsweise aus Polyamid oder auch aus Polybutylenterephthalat bestehen.

Bei der Durchführung des Verfahrens wird durch das Aufschmelzen der befestigungsseitigen Enden 6 der Borstenfilamente 4 zumindest eine Trägerplatte 11 erzeugt, die die Borstenfilamente 4 eines oder mehrerer Borstenbündel 10 und/oder mehrere Borstenbündel 10 oder sämtliche Borstenbündel 10 des Borstenbesatzes 3 miteinander verbindet.

Die in dem die Aufnahmevertiefung 5 seitlich begrenzenden Rand 14 des Borstenträgers 2 vorhandenen Ausnehmungen 15 werden durch das Filamentmaterial der befestigungsseitigen Enden 6 der Borstenfilamente 4 vorzugsweise bündig mit angrenzenden Randabschnitten bei der Befestigung der Borstenfilamente 4 an dem Borstenträger 2 ausgefüllt.

Der Borstenträger 2 wird zur Befestigung der Borstenfilamente 4 in der Aufnahmevertiefung 5 in eine Form 16 eingesetzt. Die Form 16 weist eine Formwand 17 auf, die die Aufnahmevertiefung 5 des Borstenträgers 2 derart seitlich umgibt, dass der Rand 14 des Borstenträgers 2, der die Aufnahmevertiefung 5 seitlich begrenzt, seitlich abgestützt wird.

Der Borstenträger 2 wird gemäß Figur 13 in die Form 16 eingesetzt, nachdem die befestigungsseitigen Enden 6 der Borstenfilamente 4 und der Borstenträger 2 erwärmt wurden. Das Einsetzen des Borstenträgers 2 erfolgt mit einer Hebevorrichtung 36 einer nachfolgend näher erläuterten Bürstenherstellungsvorrichtung 18.

Nach Befestigung der Borstenfilamente 4 an dem Borstenträger 2 und nach dem Ausfüllen der Aufnahmevertiefung 5 durch das Filamentmaterial der befestigungsseitigen Enden 6 der Borstenfilamente 4 wird der Borstenträger 2 über die Form 16 gekühlt. Dabei härtet eine Verbindung zwischen den Borstenfilamenten 4 und dem Borstenträger 2 aus.

Zur Durchführung des Verfahrens wird eine im Ganzen mit 18 bezeichnete Bürstenherstellungsvorrichtung verwendet. Die Bürstenherstellungsvorrichtung 18 weist eine Heizvorrichtung 19 auf. Die Heizvorrichtung 19 umfasst zwei Heizflächen 20 und 21, von denen eine erste Heizfläche 20 zur Erwärmung und zum Aufschmelzen von befestigungsseitigen Enden 6 von Borstenfilamenten 4 und eine zweite Heizfläche 21 zur Erwärmung eines Borstenträgers 2vorgesehen ist. Die Heizflächen 20 und 21 geben die Wärme dabei über Wärmestrahlung auf die Borstenfilamente 4 bzw. den Borstenträger 2 ab.

Die Heizvorrichtung 19 ist - durch ihre beiden Heizflächen 20 und 21 - dazu eingerichtet, die befestigungsseitigen Enden 6 der Borstenfilamente 4 und den Borstenträger 2 zu erwärmen und dabei die befestigungsseitigen Enden 6 im Gegensatz zum Borstenträger 2 aufzuschmelzen. Der Borstenträger 2 bleibt maßhaltig, weil er nicht so hoch erwärmt wird, dass er schmilzt.

Die Heizvorrichtung 19 ist dazu eingerichtet, die beiden Heizflächen 20 und 21 und über diese die befestigungsseitigen Enden 6 der Borstenfilamente und den Borstenträger 2 im Bereich seiner Aufnahmevertiefung 5 auf unterschiedliche Temperaturen zu erwärmen. Die Heizfläche 20 kann dabei auf eine Temperatur erwärmt werden, die ausreicht, um die befestigungsseitigen Enden 6 der Borstenfilamente 3 mittels Wärmestrahlung aufzuschmelzen.

Die beiden Heizflächen 20 und 21 sind an einem gemeinsamen Heizelement 22 und hierbei an unterschiedlichen, nämlich an einander abgewandten Seiten des Heizelements 22 angeordnet.

Auf diese Weise ist es möglich, das Heizelement 22 in seine in Figur 12 gezeigte Position zwischen einem bereitgehaltenen Borstenträger 2 und bereitgehaltenen Borstenfilamenten 4 zu positionieren, um die befestigungsseitigen Enden 6 der Borstenfilamente 4 über die Heizfläche 20 und den Borstenträger 2 über die Heizfläche 21 zu erwärmen.

Die Heizvorrichtung 19 ist zur unabhängigen Regelung der Temperaturen der beiden Heizflächen 20 und 21 eingerichtet. Die Heizvorrichtung 19 umfasst zur Erfassung und Regelung der Temperaturen der beiden Heizflächen 20 und 21 für jede der Heizflächen 20 und 21 jeweils zumindest einen Temperatursensor 23.

Mithilfe der Temperatursensoren 23 ist es möglich, die Temperaturen der Heizflächen 20 und 21 zu erfassen und so die Regelung der Temperaturen der beiden Heizflächen 20 und 21 auf eine Zieltemperatur vorzunehmen. Zur Durchführung der Temperaturregelung der Heizflächen 20 und 21 ist die Heizvorrichtung 19 mit einer entsprechenden Steuereinheit 24 ausgestattet. Die Steuereinheit 24 ist mit den Temperatursensoren 23 verbunden und kann die Temperaturen der Heizflächen 20 und 21 in Abhängigkeit einer mit den Temperatursensoren 23 erfassten Abweichung einer jeweiligen Ist-Temperatur von einer Soll-Temperatur der Heizflächen 20, 21 anpassen.

Die zuvor bereits erwähnte Form 16 ist Teil der Bürstenherstellungsvorrichtung 18. Die Form 16 dient der Aufnahme und Abstützung des Borstenträgers 2 beim Befestigen der Borstenfilamente 4 an dem Borstenträger 2. Der Borstenträger 2 wird zur Befestigung der Borstenfilamente 4 in der Aufnahmevertiefung 5 nach Erwärmung und Aufschmelzen der befestigungsseitigen Enden 6 der Borstenfilamente 4 und nach Erwärmung des Borstenträgers 2, ohne dass dieser aufgeschmolzen wird, mit der Hebevorrichtung 36 der Bürstenherstellungsvorrichtung 18 in die Form 16 abgesenkt.

Die Bürstenherstellungsvorrichtung 18 umfasst auch eine Profilierungsvorrichtung 25. Die Profilierungsvorrichtung 25 ist in Figur 11 sowie in Teilen in den Figuren 12 und 13 gezeigt. Die Profilierungsvorrichtung 25 dient zur Profilierung des Borstenbesatzes 3 der herzustellenden Bürste 1.

Die Profilierungsvorrichtung 25 weist ein Profilierungswerkzeug 26 zur Profilierung einer Reinigungsseite 27 des Borstenbesatzes 3 und ein Gegenprofilierungswerkzeug 28 zur Abstützung und Profilierung einer Befestigungsseite 29 des Borstenbesatzes 3 auf.

Die Funktionsweise der Profilierungsvorrichtung 25 wird beispielsweise aus Figur 11 ersichtlich. Demnach wird das Profilierungswerkzeug 26 mit seiner formgebenden, konvex geformten Oberfläche gegen die Reinigungsseite 27 des Borstenbesatzes 3 bewegt. Dadurch werden die Borstenfilamente 4 in Bezug auf ihre Längsachse gemäß der Form des Profilierungswerkzeugs 26 axial verschoben. Durch das an der Befestigungsseite 29 des Borstenbesatzes 3 angelegte Gegenprofilierungswerkzeug 28, dessen Oberfläche eine Kontur aufweist, die der Zielkontur des Borstenbesatzes 3 an seiner Reinigungsseite 27 entspricht und konkav geformt ist, werden die Borstenfilamente 4 abgestützt und in Form gebracht.

Der unterschiedliche Überstand der Borstenfilamente 4 an der Befestigungsseite 29 des Borstenbesatzes 3 wird beim Aufschmelzen der befestigungsseitigen Enden 6 der Borstenfilamente 4 zur Befestigung der Borstenfilamente 4 an dem Borstenträger 2 einer herzustellenden Bürste 1 egalisiert.

Figur 11 zeigt, dass die Bürstenherstellungsvorrichtung 18 zudem einen Filamenthalter 30 mit einer Klemmung 39 zum klemmenden Halten der Borstenfilamente 4 des Borstenbesatzes 3 aufweist. Der Filamenthalter 30 ist als Kassette ausgebildet und kann von Station zu Station der Bürstenherstellungsvorrichtung 18 bewegt werden und die Borstenfilamente 4 bei der Profilierung des Borstenbesatzes 3 genauso wie bei dem Erwärmen und Aufschmelzen ihrer befestigungsseitigen Enden 6 an der Heizvorrichtung 19 halten. Der Filamenthalter 30 weist ein Lochbild 37 von Aufnahmelöchern 38 für Borstenbündel 10 aus Borstenfilamenten 4 auf, das einer Bündelanordnung von Borstenbündeln 10 im Borstenbesatz 3 entspricht.

Auch beim Eindrücken der befestigungsseitigen Enden 6 der Borstenfilamente 4 in die Aufnahmevertiefung 5 eines bereitgehaltenen Borstenträgers 2 wird der Filamenthalter 30 verwendet. Hierbei ist seine Klemmung 39 jedoch geöffnet. So können die Borstenfilamente 4 mithilfe des Profilierungswerkzeugs 26, das die Borstenfilamente 4 an der Befestigungsseite 27 des Borstenbesatzes 3 axial beaufschlagt, mit ihren befestigungsseitigen Enden 6 in die Aufnahmevertiefung 5 und dabei gegen den erwärmten Borstenträger 2 gedrückt werden. Dabei werden die Borstenfilamente 4 von dem Filamenthalter 30 und seinen durchgehenden Aufnahmelöchern 38 geführt. Das Profilierungswerkzeug 26 fungiert dann als Drücker der Bürstenherstellungsvorrichtung 18 und ermöglicht die Verbindung des Borstenträgers 2 mit den Borstenfilamenten 4. Die Borstenfilamente 4 werden zur Verbindung mit dem Borstenträger 2 mit ihren aufgeschmolzenen befestigungsseitigen Enden 6 mit dem Drücker 26 der Bürstenherstellungsvorrichtung 18 gegen den erwärmten Borstenträger 2 gedrückt und so an dem Borstenträger 2 befestigt.

Zur Kühlung des Borstenträgers 2 nach der Befestigung der Borstenfilamente 4 an dem Borstenträger 2 weist die Bürstenherstellungsvorrichtung 18 außerdem eine Kühlvorrichtung 31 auf. Die Kühlvorrichtung 31 ist dazu eingerichtet, den in der Form 16 angeordneten Borstenträger 2 abzukühlen.

Gemäß Figur 11 weist die Bürstenherstellungsvorrichtung 18 außerdem ein Magazin 32 auf, in dem ein Vorrat an losen Borstenfilamenten 33 angeordnet ist.

Mithilfe einer Abteilvorrichtung 34 der Bürstenherstellungsvorrichtung 18 können Borstenbündel 10 aus dem Vorrat an losen Borstenfilamenten 33 in dem Magazin 32 abgeteilt werden. Mithilfe einer Bündelformeinheit 35 können die Borstenbündel 10 in ihre im Borstenbesatz 3 der herzustellenden Bürste 1 gewünschte Zielform gebracht werden.

Aus der Bündelformeinheit 35 werden die Borstenbündel 10 an den Filamenthalter 30 übergeben und mit der Klemmung 39 in den als Durchgangslöchern ausgebildeten Aufnahmelöchern 38 fixiert.

Die Bürstenherstellungsvorrichtung 18 weist eine Abgabevorrichtung 40 zur Abgabe von Primer auf Borstenfilamente 4 und/oder Borstenträger 2 auf. Vor der Verbindung der Borstenfilamente 4 mit den Borstenträgern 2 kann auf diese Weise Primer auf Borstenfilamente 4 und/oder Borstenträger 2 abgegeben werden. Primer kann die Herstellung einer zuverlässigen Verbindung zwischen Borstenfilamenten 4 und Borstenträgern 2 nach dem zuvor beschriebenen Verfahren begünstigen.

Ferner können bei der Durchführung des Verfahrens Borstenträger 2 und Borstenfilamente 4 verwendet werden, die zumindest ein Additiv enthalten, das die Verbindung zwischen den Borstenträgern 2 und den Borstenfilamenten 4 verbessert. Vorteilhaft sind Additive und Primer, die die Pfropfanteile der Kunststoffverbindung zwischen den Borstenträgern 2 und den Borstenfilamenten 4 erhöhen.

Fig 14 zeigt, wie die fertige Bürste 1 nach Abkühlen des Borstenträgers 2 mit der Hebevorrichtung 36 aus der Form 16 gehoben wird. Der Borstenbesatz 3 ist nun mit dem Borstenträger 2 der Bürste 1 verbunden.

Die Erfindung befasst sich mit Verbesserungen auf dem technischen Gebiet der Bürstenherstellung und betrifft unter anderem eine Bürste 1, die einen Borstenträger 2 mit einer Aufnahmevertiefung 5 aufweist, die beim Befestigen von Borstenfilamenten 4 an dem Borstenträger 2 durch aufgeschmolzenes Filamentmaterial befestigungsseitiger Enden 6 der Borstenfilamente 4 der herzustellenden Bürste 1 ausgefüllt ist.

### Bezugszeichenliste

- 1: Bürste
- 2: Borstenträger, Bürstenkopf
- 3: Borstenbesatz
- 4: Borstenfilamente
- 5: Aufnahmevertiefung
- 6: befestigungsseitige Enden von 4
- 7: Halsabschnitt
- 8: Griff
- 9: Versteifungsrippe
- 10: Borstenbündel
- 11: Trägerplatte
- 12: Oberfläche von 11
- 13: Bürstenoberfläche
- 14: Rand
- 15: Ausnehmung in 15
- 16: Form
- 17: Formwand
- 18: Bürstenherstellungsvorrichtung
- 19: Heizvorrichtung
- 20: Heizfläche für 6
- 21: Heizfläche für 2
- 22: Heizelement
- 23: Temperatursensor
- 24: Steuereinheit
- 25: Profilierungsvorrichtung
- 26: Drücker, Profilierungswerkzeug
- 27: Reinigungsseite
- 28: Gegenprofilierungswerkzeug
- 29: Befestigungsseite
- 30: Filamenthalter
- 31: Kühlvorrichtung
- 32: Magazin
- 33: Vorrat an losen Borstenfilamenten
- 34: Abteilvorrichtung
- 35: Bündelformeinheit
- 36: Hebevorrichtung
- 37: Lochbild von 30
- 38: Aufnahmeloch in 30
- 39: Klemmung von 30
- 40: Abgabevorrichtung für Primer

## Patentansprüche

1. Verfahren zur Herstellung einer Bürste (1), insbesondere einer Zahnbürste, mit einem Borstenträger (2) und einem Borstenbesatz (3) aus Borstenfilamenten (4), wobei der Borstenträger (2) und befestigungsseitige Enden (6) der Borstenfilamente (4) des Borstenbesatzes (3) erwärmt und die befestigungsseitigen Enden (6) der Borstenfilamente (4) im Gegensatz zum Borstenträger (2) aufgeschmolzen werden, wonach der Borstenträger (2) und die Borstenfilamente (4) des Borstenbesatzes (3) miteinander verbunden werden, **dadurch gekennzeichnet, dass** der Borstenträger (2) und die Borstenfilamente (4) des Borstenbesatzes (3) stoffschlüssig miteinander verbunden werden.

2. Verfahren nach dem vorherigen Anspruch, wobei der Borstenträger (2) und befestigungsseitige Enden (6) der Borstenfilamente (4) des Borstenbesatzes (3) auf unterschiedliche Temperaturen erwärmt werden, und/oder wobei der Borstenträger (2) und die Borstenfilamente (4) aus für eine stoffschlüssige Verbindung untereinander kompatiblen Werkstoffen oder aus demselben für eine stoffschlüssige Verbindung untereinander kompatiblen Werkstoff bestehen.

3. Verfahren nach einem der beiden vorherigen Ansprüche, wobei ein Borstenträger (2) und/oder Borstenfilamente (4) verwendet werden, die zumindest ein Additiv enthalten, das eine Verbindung zwischen dem Borstenträger (2) und Borstenfilamenten (4) vereinfacht und/oder verbessert, und/oder wobei vor dem Verbinden der Borstenfilamente (4) mit dem Borstenträger (2) ein Primer als Haftvermittler auf die Borstenfilamente (4) und/oder den Borstenträger (2) aufgebracht wird.

4. Verfahren nach einem der vorherigen Ansprüche, wobei durch das Aufschmelzen der befestigungsseitigen Enden (6) der Borstenfilamente (4) zumindest eine Trägerplatte (11) erzeugt wird, die die Borstenfilamente (4) eines oder mehrerer Borstenbündel (10) und/oder mehrere Borstenbündel (10) oder sämtliche Borstenbündel (10) des Borstenbesatzes (3) miteinander verbindet, und/oder wobei der Borstenträger (2) auf eine Temperatur unterhalb seiner Schmelztemperatur erwärmt wird.

5. Verfahren nach einem der vorherigen Ansprüche, wobei der Borstenträger (2) auf eine niedrigere Temperatur als die befestigungsseitigen Enden (6) der Borstenfilamente (4) erwärmt wird.

6. Verfahren nach einem der vorherigen Ansprüche, wobei der Borstenträger (2) zur Verbindung der Borstenfilamente (4) mit dem Borstenträger (2) in eine Form (16) eingesetzt wird, die eine Formwand (17) aufweist, die den Borstenträger (2), insbesondere eine Aufnahmevertiefung (5) des Borstenträgers (2) für die befestigungsseitigen Enden (6) der Borstenfilamente (4), zumindest abschnittsweise seitlich umgibt.

7. Verfahren nach einem der vorherigen Ansprüche, wobei die Borstenfilamente (4) zur Verbindung mit dem Borstenträger (2) mit ihren aufgeschmolzenen befestigungsseitigen Enden (6) gegen den erwärmten Borstenträger (2) gedrückt werden, oder wobei der erwärmte Borstenträger (2) gegen die aufgeschmolzenen befestigungsseitigen Enden (6) der Borstenfilamente (4) gedrückt wird, und/oder wobei der Borstenträger (2) nach Verbindung mit den Borstenfilamenten (4) gekühlt wird, insbesondere über die Form (16).

8. Bürstenherstellungsvorrichtung (18) eingerichtet zur Herstellung von Bürsten (1) mit einem Borstenträger (2) und einem Borstenbesatz (3) aus Borstenfilamenten (4) nach einem Verfahren gemäß einem der Ansprüche 1 bis 7, wobei die Bürstenherstellungsvorrichtung (18) eine Heizvorrichtung(19) aufweist, wobei die Heizvorrichtung (19) dazu eingerichtet ist, befestigungsseitige Enden (6) von Borstenfilamenten (4) eines Borstenbesatzes (3) und einen Borstenträger (2), mit dem die Borstenfilamente (4) des Borstenbesatzes (3) verbunden werden sollen, zu erwärmen und die befestigungsseitigen Enden (6) der Borstenfilamente (4) im Gegensatz zum Borstenträger (2) aufzuschmelzen, um den Borstenträger (2) und die Borstenfilamente (4) des Borstenbesatzes (3) stoffschlüssig miteinander zu verbinden.

9. Bürstenherstellungsvorrichtung (18) nach dem vorherigen Anspruch, wobei die Heizvorrichtung (19) zwei Heizflächen (20,21) umfasst, von denen eine erste Heizfläche (20) zur Erwärmung von befestigungsseitigen Enden (6) von Borstenfilamenten (4) eines Borstenbesatzes (3) einer herzustellenden Bürste (1) und eine zweite Heizfläche (21) zur Erwärmung eines Borstenträgers (2) der herzustellenden Bürste (1) vorgesehen ist, mit dem die Borstenfilamente (4) des Borstenbesatzes (3) verbunden werden sollen, wobei die Heizvorrichtung (19) dazu eingerichtet ist, die befestigungsseitigen Enden (6) der Borstenfilamente (4) und den Borstenträger (2) zu erwärmen und die befestigungsseitigen Enden (6) der Borstenfilamente (4) im Gegensatz zum Borstenträger (2) aufzuschmelzen.

10. Bürstenherstellungsvorrichtung (18) nach einem der Ansprüche 8 oder 9, wobei die Heizvorrichtung (19) dazu eingerichtet ist, die befestigungsseitigen Enden (6) der Borstenfilamente (4) und den Borstenträger (2) auf unterschiedliche Temperaturen zu erwärmen.

11. Bürstenherstellungsvorrichtung (18) nach einem der Ansprüche 9 oder 10, wobei die Heizvorrichtung (19) dazu eingerichtet ist, die Heizflächen (20,21) auf unterschiedliche Temperaturen zu erwärmen.

12. Bürstenherstellungsvorrichtung (18) nach einem der Ansprüche 9 bis 11, wobei die Heizvorrichtung (19) dazu eingerichtet ist, die erste Heizfläche (20) auf eine Temperatur zu erwärmen, die ausreicht, um die befestigungsseitigen Enden (6) der Borstenfilamente (4) aufzuschmelzen, und/oder wobei die Heizvorrichtung (19) dazu eingerichtet ist, die zweite Heizfläche (21) auf eine Temperatur zu erwärmen, die ausreicht, um den Borstenträger (2) auf eine Temperatur unterhalb seiner Schmelztemperatur zu erwärmen.

13. Bürstenherstellungsvorrichtung (18) nach einem der Ansprüche 9 bis 12, wobei ein Abstand zwischen der ersten Heizfläche (20) und einer von der Bürstenherstellungsvorrichtung (18) vorgegebenen Position, in der die befestigungsseitigen Enden (6) der Borstenfilamente (4) zum Erwärmen, insbesondere zum Aufschmelzen, bereitgehalten werden, größer als ein Abstand zwischen der zweiten Heizfläche (21) und einer von der Bürstenherstellungsvorrichtung (18) vorgegebenen Position ist, in der der Borstenträger (2) zum Erwärmen bereitgehalten wird.

14. Bürstenherstellungsvorrichtung (18) nach einem der Ansprüche 9 bis 13, wobei die beiden Heizflächen (20,21) an einem gemeinsamen Heizelement (22), insbesondere an unterschiedlichen Seiten, vorzugsweise an einander abgewandten Seiten des Heizelements (22), angeordnet sind.

15. Bürstenherstellungsvorrichtung (18) nach einem der Ansprüche 9 bis 14, wobei die Heizvorrichtung (19) zur vorzugsweise unabhängigen Regelung der Temperaturen der beiden Heizflächen (20,21) eingerichtet ist, insbesondere wobei die Heizvorrichtung (19) eine Steuereinheit (24) und zumindest einen Temperatursensor (23) zur Erfassung und Regelung der Temperatur zumindest einer der beiden Heizflächen (20,21) aufweist, vorzugsweise wobei jeder Heizfläche (20,21) zumindest ein Temperatursensor (23) zugeordnet ist.

16. Bürstenherstellungsvorrichtung (18) nach einem der Ansprüche 8 bis 15, wobei die Bürstenherstellungsvorrichtung (18) eine Form (16) zur Aufnahme und Abstützung des Borstenträgers (2) beim Verbinden des Borstenträgers (2) mit den Borstenfilamenten (4) des Borstenbesatzes (3) aufweist, und/oder wobei die Bürstenherstellungsvorrichtung (18) eine Abgabevorrichtung (40) zur Abgabe von Primer auf Borstenfilamente (4) und/oder Borstenträger (2) aufweist.

17. Bürstenherstellungsvorrichtung (18) nach einem der Ansprüche 8 bis 16, wobei die Bürstenherstellungsvorrichtung (18) einen Filamenthalter (30) zum, insbesondere klemmenden, Halten der Borstenfilamente (4) des Borstenbesatzes (3), und/oder wobei eine Kühlvorrichtung (31) zur Kühlung des Borstenträgers (2), und/oder einen Drücker (26) aufweist, der dazu eingerichtet ist, Borstenfilamente (4) des Borstenbesatzes (3) mit ihren aufgeschmolzenen befestigungsseitigen Enden (6) gegen einen erwärmten Borstenträger (2) oder einen erwärmten Borstenträger (2) gegen aufgeschmolzene Enden (6) von Borstenfilamenten (4) zu drücken.

## Claims

1. A method for manufacturing a brush (1), in particular a toothbrush, having a bristle carrier (2) and a bristle complement (3) of bristle filaments (4), wherein the bristle carrier (2) and fastening-proximal ends (6) of the bristle filaments (4) of the bristle complement (3) are heated, and the fastening-proximal ends (6) of the bristle filaments (4), as opposed to the bristle carrier (2), are fused, whereupon the bristle carrier (2) and the bristle filaments (4) of the bristle complement (3) are connected to one another, **characterized in that** the bristle carrier (2) and the bristle filaments (4) of the bristle complement (3) are connected to one another in a materially integral manner.

2. The method as claimed in the preceding claim, wherein the bristle carrier (2) and fastening-proximal ends (6) of the bristle filaments (4) of the bristle complement (3) are heated to different temperatures, and/or wherein the bristle carrier (2) and the bristle filaments (4) are composed of materials which are compatible for a mutual materially integral connection, or are composed of the same material which is compatible for a mutual materially integral connection.

3. The method as claimed in one of the two preceding claims, wherein a bristle carrier (2) and/or bristle filaments (4) are/is used which contain/contains at least one additive that simplifies and/or improves a connection between the bristle carrier (2) and bristle filaments (4), and/or wherein prior to connecting the bristle filaments (4) to the bristle carrier (2) a primer as a bonding agent is applied to the bristle filaments (4) and/or the bristle carrier (2).

4. The method as claimed in one of the preceding claims, wherein by fusing the fastening-proximal ends (6) of the bristle filaments (4) at least one carrier plate (11) which connects the bristle filaments (4) of one or of a plurality of bristle bundles (10) and/or a plurality of bristle bundles (10), or all bristle bundles (10), of the bristle complement (3) to one another is generated, and/or wherein the bristle carrier (2) is heated to a temperature below its melting temperature.

5. The method as claimed in one of the preceding claims, wherein the bristle carrier (2) is heated to a lower temperature than the fastening-proximal ends (6) of the bristle filaments (4).

6. The method as claimed in one of the preceding claims, wherein the bristle carrier (2) for connecting the bristle filaments (4) to the bristle carrier (2) is inserted into a mold (16) which has a mold wall (17) that at least in portions laterally surrounds the bristle carrier (2), in particular a receptacle depression (5) of the bristle carrier (2) for the fastening-proximal ends (6) of the bristle filaments (4).

7. The method as claimed in one of the preceding claims, wherein the bristle filaments (4) for connecting to the bristle carrier (2) by way of their fused fastening-proximal ends (6) are pressed against the heated bristle carrier (2), or wherein the heated bristle carrier (2) is pressed against the fused fastening-proximal ends (6) of the bristle filaments (4), and/or wherein the bristle carrier (2) after connecting to the bristle filaments (4) is cooled, in particular by way of the mold (16).

8. A brush manufacturing device (18) adapted for manufacturing brushes (1) having a bristle carrier (2) and a bristle complement (3) of bristle filaments (4) by a method as claimed in one of claims 1 to 7, wherein the brush manufacturing device (18) has a heating device (19), wherein the heating device (19) is specified to heat fastening-proximal ends (6) of bristle filaments (4) of a bristle complement (3) and a bristle carrier (2) to which the bristle filaments (4) of the bristle complement (3) are to be connected, and to fuse the fastening-proximal ends (6) of the bristle filaments (4), as opposed to the bristle carrier (2), in order to connect the bristle carrier (2) and the bristle filaments (4) of the bristle complement (3) in a materially integral manner.

9. The brush manufacturing device (18) as claimed in the preceding claim, wherein the heating device (19) comprises two heating areas (20, 21) of which a first heating area (20) is provided for heating fastening-proximal ends (6) of bristle filaments (4) of a bristle complement (3) of a brush (1) to be manufactured, and a second heating area (21) is provided for heating a bristle carrier (2) of the brush (1) to be manufactured, to which bristle carrier (2) the bristle filaments (4) of the bristle complement (3) are to be connected, wherein the heating device (19) is specified to heat the fastening-proximal ends (6) of the bristle filaments (4) and the bristle carrier(2), and to fuse the fastening-proximal ends (6) of the bristle filaments (4), as opposed to the bristle carrier (2).

10. The brush manufacturing device (18) as claimed in one of claims 8 or 9, wherein the heating device (19) is specified to heat the fastening-proximal ends (6) of the bristle filaments (4) and the bristle carrier (2) to different temperatures.

11. The brush manufacturing device (18) as claimed in one of claims 9 or 10, wherein the heating device (19) is specified to heat the heating areas (20, 21) to different temperatures.

12. The brush manufacturing device (18) as claimed in one of claims 9 to 11, wherein the heating device (19) is specified to heat the first heating area (20) to a temperature that is sufficient to fuse the fastening-proximal ends (6) of the bristle filaments (4), and/or wherein the heating device (19) is specified to heat the second heating area (21) to a temperature that is sufficient to heat the bristle carrier (2) to a temperature below its melting temperature.

13. The brush manufacturing device (18) as claimed in one of claims 9 to 12, wherein a spacing between the first heating area (20) and a position which is predefined by the brush manufacturing device (18) and in which the fastening-proximal ends (6) of the bristle filaments (4) are offered up for heating, in particular for fusing, is larger than a spacing between the second heating area (21) and a position which is predefined by the brush manufacturing device (18) and in which the bristle carrier (2) is offered up for heating.

14. The brush manufacturing device (18) as claimed in one of claims 9 to 13, wherein the two heating areas (20, 21) are disposed on a common heating element (22), in particular on different sides, preferably on sides of the heating element (22) that face away from one another.

15. The brush manufacturing device (18) as claimed in one of claims 9 to 14, wherein the heating device (19) is specified to preferably independently feedback-control the temperatures of the two heating areas (20, 21), in particular wherein the heating device (19) has a control unit (24) and at least one temperature sensor (23) for detecting and feedback-controlling the temperature of at least one of the two heating areas (20, 21), preferably wherein each heating area (20, 21) is assigned at least one temperature sensor (23).

16. The brush manufacturing device (18) as claimed in one of claims 8 to 15, wherein the brush manufacturing device (18) has a mold (16) for receiving and supporting the bristle carrier (2) when connecting the bristle carrier (2) to the bristle filaments (4) of the bristle complement (3), and/or wherein the brush manufacturing device (18) has a dispensing device (40) for dispensing primer onto bristle filaments (4) and/or bristle carriers (2).

17. The brush manufacturing device (18) as claimed in one of claims 8 to 16, wherein the brush manufacturing device (18) has a filament holder (30) for holding, in particular in a clamping manner, the bristle filaments (4) of the bristle complement (3), and/or has a cooling device (31) for cooling the bristle carrier (2), and/or a pusher (26) which is specified for pressing bristle filaments (4) of the bristle complement (3), by way of their fused fastening-proximal ends (6), against a heated bristle carrier (2), or a heated bristle carrier (2) against fused ends (6) of bristle filaments (4).

## Revendications

1. Procédé pour la fabrication d'une brosse (1), en particulier d'une brosse à dents, munie d'un support de brosse (2) et d'une garniture de brosse (3) faite de filaments de poils de brosse (4), dans lequel le support de brosse (2) et des extrémités côté fixation (6) des filaments de poils de brosse (4) de la garniture de brosse (3) sont chauffés et les extrémités côté fixation (6) des filaments de poils de brosse (4) sont fondues, contrairement au support de brosse (2), après quoi le support de brosse (2) et les filaments de poils de brosse (4) de la garniture de brosse (3) sont assemblés ensemble, **caractérisé en ce que** le support de brosse (2) et les filaments de poils de brosse (4) de la garniture de brosse (3) sont liés ensemble par solidarité de matière.

2. Procédé selon la revendication précédente, dans lequel le support de brosse (2) et les extrémités côté fixation (6) des filaments de poils de brosse (4) de la garniture de brosse (3) sont chauffés à des températures différentes et/ou dans lequel le support de brosse (2) et les filaments de poils de brosse (4) se composent de matériaux compatibles entre eux en vue d'une liaison par solidarité de matière ou se composent du même matériau compatible entre eux en vue d'une liaison par solidarité de matière.

3. Procédé selon l'une des deux revendications précédentes, dans lequel sont utilisés un support de brosse (2) et/ou des filaments de poils de brosse (4) qui contiennent au moins un additif qui facilite ou améliore une liaison entre le support de brosse (2) et les filaments de poils de brosse (4) et/ou dans lequel, avant l'assemblage des filaments de poils de brosse (4) avec le support de brosse (2), un apprêt facilitant l'adhérence est appliqué sur les filaments de poils de brosse (4) et/ou le support de brosse (2).

4. Procédé selon l'une des revendications précédentes, dans lequel la fusion des extrémités côté fixation (6) des filaments de poils de brosse (4) crée au moins une plaque de support (11) qui lie entre eux les filaments de poils de brosse (4) d'une ou plusieurs touffes de poils de brosse (10) et/ou de plusieurs touffes de poils de brosse (10) ou de toutes les touffes de poils de brosse (10) de la garniture de brosse (3) et/ou dans lequel le support de brosse (2) est chauffé à une température inférieure à sa température de fusion.

5. Procédé selon l'une des revendications précédentes, dans lequel le support de brosse (2) est chauffé à une température plus basse que les extrémités côté fixation (6) des filaments de poils de brosse (4).

6. Procédé selon l'une des revendications précédentes dans lequel, en vue de lier les filaments de poils de brosse (4) au support de brosse (2), le support de brosse (2) est introduit dans un moule (16) présentant une paroi de moule (17) qui entoure au moins en partie sur les côtés le support de brosse (2), en particulier un creux de réception (5) du support de brosse (2) destiné aux extrémités côté fixation (6) des filaments de poils de brosse (4).

7. Procédé selon l'une des revendications précédentes, dans lequel les filaments de poils de brosse (4) sont pressés contre le support de brosse (2) chauffé à leurs extrémités côté fixation (6) fondues en vue de la liaison avec le support de brosse (2) ou dans lequel le support de brosse (2) chauffé est pressé contre les extrémités côté fixation (6) fondues des filaments de poils de brosse (4) et/ou dans lequel le support de brosse (2) est refroidi après l'assemblage avec le filaments de poils de brosse (4), en particulier à l'aide du moule (16).

8. Dispositif pour la fabrication de brosses (18) conçu pour la fabrication de brosses (1) comprenant un support de brosse (2) et une garniture de brosse (3) faite de filaments de poils de brosse (4) par un procédé selon l'une des revendications 1 à 7, dans lequel le dispositif pour la fabrication de brosses (18) comporte un dispositif de chauffage (19), dans lequel le dispositif de chauffage (19) est conçu pour chauffer des extrémités côté fixation (6) de filaments de poils de brosse (4) d'une garniture de brosse (3) et un support de brosse (2) auquel les filaments de poils de brosse (4) de la garniture de brosse (3) doivent être liés et pour faire fondre les extrémités côté fixation (6) des filaments de poils de brosse (4), contrairement au support de brosse (2), afin de lier entre eux par solidarité de matière le support de brosse (2) et les filaments de poils de brosse (4) de la garniture de brosse (3).

9. Dispositif pour la fabrication de brosses (18) selon la revendication précédente, dans lequel le dispositif de chauffage (19) comprend deux surfaces chauffantes (20, 21) dont une première surface chauffante (20) sert au chauffage d'extrémités côté fixation (6) de filaments de poils de brosse (4) d'une garniture de brosse (3) d'une brosse (1) à fabriquer er une deuxième surface chauffante (21) sert à chauffer un support de brosse (2) de la brosse (1) à fabriquer auquel les filaments de poils de brosse (4) de la garniture de brosse (3) doivent être liés, le dispositif de chauffage (19) étant conçu pour chauffer les extrémités côté fixation (6) des filaments de poils de brosse (4) et le support de brosse (2) et pour faire fondre les extrémités côté fixation (6) des filaments de poils de brosse (4), contrairement au support de brosse (2).

10. Dispositif pour la fabrication de brosses (18) selon l'une des revendications 8 ou 9, dans lequel le dispositif de chauffage (19) est conçu pour chauffer les extrémités côté fixation (6) des filaments de poils de brosse (4) et le support de brosse (2) à des températures différentes.

11. Dispositif pour la fabrication de brosses (18) selon l'une des revendications 9 ou 10, dans lequel le dispositif de chauffage (19) est conçu pour chauffer les surfaces chauffantes (20, 21) à des températures différentes.

12. Dispositif pour la fabrication de brosses (18) selon l'une des revendications 9 à 11, dans lequel le dispositif de chauffage (19) est conçu pour chauffer la première surface chauffante (20) à une température suffisante pour faire fondre les extrémités côté fixation (6) des filaments de poils de brosse (4) et/ou dans lequel le dispositif de chauffage (19) est conçu pour chauffer la deuxième surface chauffante (21) à une température suffisante pour chauffer le support de brosse (2) à une température inférieure à sa température de fusion.

13. Dispositif pour la fabrication de brosses (18) selon l'une des revendications 9 à 12, dans lequel une distance entre la première surface chauffante (20) et une position prédéterminée du dispositif pourla fabrication de brosses (18) à laquelle les extrémités côté fixation (6) des filaments de poils de brosse (4) doivent être présentées pour le chauffage, en particulier pour la fusion, est plus grande qu'une distance entre la deuxième surface chauffante (21) et une position prédéterminée du dispositif pour la fabrication de brosses (18) dans laquelle le support de brosse (2) est présenté pour le chauffage.

14. Dispositif pour la fabrication de brosses (18) selon l'une des revendications 9 à 13, dans lequel les deux surfaces chauffantes (20, 21) sont disposées sur un élément chauffant (22) commun, en particulier sur des côtés différents de l'élément chauffant (22), de préférence sur des côtés tournés à l'opposé l'un de l'autre.

15. Dispositif pour la fabrication de brosses (18) selon l'une des revendications 9 à 14, dans lequel le dispositif de chauffage (19) est conçu pour une régulation de préférence indépendante des deux surfaces chauffantes (20, 21), en particulier dans lequel le dispositif de chauffage (19) comporte une unité de commande (24) et au moins une sonde de température (23) pour acquérir et régler la température d'au moins une des deux surfaces chauffantes (20, 21), de préférence dans lequel chaque surface chauffante (20, 21) est associée à au moins une sonde de température (23).

16. Dispositif pour la fabrication de brosses (18) selon l'une des revendications 8 à 15, dans lequel le dispositif pour la fabrication de brosses (18) comporte un moule (16) destiné à recevoir et à supporter le support de brosse (2) lors de l'assemblage du support de brosse (2) avec les filaments de poils de brosse (4) de la garniture de brosse (3) et/ou dans lequel le dispositif pour la fabrication de brosses (18) comporte un dispositif de débit (40) pour débiter de l'apprêt sur les filaments de poils de brosse (4) et/ou sur le support de brosse (2).

17. Dispositif pour la fabrication de brosses (18) selon l'une des revendications 8 à 16, dans lequel le dispositif pour la fabrication de brosses (18) comporte une fixation de filaments (30) pour le maintien, en particulier par serrage, des filaments de poils de brosse (4) de la garniture de brosse (3), et/ou un dispositif de refroidissement (31) pour le refroidissement du support de brosse (2), et/ou un poussoir (26) qui est conçu pour presser les filaments de poils de brosse (4) de la garniture de brosse (3) par leurs extrémités côté fixation (6) fondues contre un support de brosse (2) chauffé ou pour presser un support de brosse (2) chauffé contre des extrémités (6) fondues de filaments de poils de brosse (4).
